# FASCICULE DE BREVET EUROPEEN

(11) **EP 0 656 390 B1**
(45) Date de publication et mention de la délivrance du brevet: **06.05.2004**
(21) Numéro de dépôt: 94402742.4
(22) Date de dépôt: 30.11.1994
(51) Int. Cl.: C08K 3/22, C08L 23/08, H01B 3/44

(54) **Matériau fortement ignifugé et sans halogène, facilement déchirable et ayant une très bonne souplesse à basse température, notamment pour revêtement de câble**
Stark flammwidriges, halogenfreies, leichteinreissbares, bei niedriger Temperatur nachgiebiges Material für Kabelbeschichtung
Highly fire-retardant, halogen-free, easily tearable, flexible at low temperature moulding composition for coating of cables

(30) Priorité: 03.12.1993 FR 9314543
(43) Date de publication de la demande: 07.06.1995
(73) Titulaire: NEXANS France, 75008 Paris (FR)
(72) Inventeur: Loriol, Renée, F-69007 Lyon (FR); Dupont, Christophe, F-69007 Lyon (FR); Maz, Gérard, F-69290 Craponne (FR); Seux, Thierry, F-69008 Lyon (FR)
(74) Mandataire: Feray, Valérie

(56) Documents cités:
- EP-A- 0 383 147
- DE-A- 3 605 848
- FR-A- 2 538 401
- DATABASE WPI Section Ch, Week 7927, Derwent Publications Ltd., London, GB; Class A18, AN 79-49761B & JP-A-54 064 545 (SUMITOMO BAKELITE) 24 Mai 1979
- DATABASE WPI Section Ch, Week 9303, Derwent Publications Ltd., London, GB; Class A17, AN 93-020575 & JP-A-4 335 055 (SUMITOMO ELECTRIC) 24 Novembre 1992

## Description

L'invention concerne un matériau fortement ignifugé et sans halogène, facilement déchirable et ayant une très bonne souplesse à basse température, utilisable notamment pour constituer une gaine de câble et plus particulièrement une couche intermédiaire dans le revêtement de ce câble. Cette couche intermédiaire est placée entre une protection mécanique et un assemblage de conducteurs, chaque conducteur étant éventuellement déjà isolé par un revêtement individuel. On réalise une telle couche intermédiaire le long du conducteur ou des conducteurs, par un procédé d'extrusion continue. Pour certaines applications on souhaite que les matériaux d'un câble soit fortement ignifugés, sans contenir d'halogène, et que le matériau de la couche intermédiaire soit facilement déchirable pour faciliter les opérations de raccordement du câble. Pour certaines applications on souhaite en outre que ce matériau soit souple à basse température afin de permettre l'installation du câble dans des locaux exigus, ou bien dans tous les cas où l'encombrement doit être réduit le plus possible.

On connaît des matériaux thermoplastiques fortement ignifugés et ne contenant pas d'halogène, mais ils présentent une forte résistance au déchirement, à la température ambiante (par exemple le document FR 2 538 401). Le déchirement longitudinal peut être facilité au moyen d'un fil de déchirement placé sous la couche intermédiaire. Néanmoins il est parfois nécessaire de couper le revêtement longitudinalement au moyen d'un outil tranchant. Dans tous les cas, il est nécessaire de réaliser une coupure circulaire pour désolidariser la partie du revêtement qui est à enlever, par rapport à celle qui doit rester autour du conducteur ou des conducteurs. La réalisation d'une coupure longitudinale ou d'une coupure circulaire au moyen d'un outil tranchant présente toujours le risque d'endommager le revêtement individuel des conducteurs, s'il y en a un, ou même d'endommager le conducteur ou les conducteurs que comporte ce câble.

Le but de l'invention est donc de proposer un matériau de revêtement pouvant être déchiré facilement, à la température ambiante, sans nécessiter un outil tranchant, tout en présentant une forte résistance au feu, une absence d'halogène, et une très bonne souplesse à basse température.

L'objet de l'invention est un matériau fortement ignifugé et sans halogène, facilement déchirable et ayant une très bonne souplesse à basse température, notamment pour revêtement de câble; caractérisé en ce qu'il a la composition suivante, exprimée en parties pour 100 parties de l'ensemble des polymères mentionnés ci-dessous :

| | |
|---|---|
| - un premier copolymère éthyléne-vinylacétate comportant 40 à 50% d'acétate; | 50 à 70 parties |
| - un second copolymère éthylène-vinylacétate comportant 30 à 50 % d'acétate; un silane étant greffé sur ce second copolymère; | 20 à 40 parties |
| - un copolymère éthylène - propylène comportant entre 60 et 75 % d'éthylène; | 10 à 20 parties |
| - un agent ignifugeant; | en quantité choisie selon le degré souhaité de résistance au feu. |

Le tableau ci-dessous donne un exemple de composition du matériau selon l'invention, en parties pour 100 parties de l'ensemble des polymères mentionnés ci-dessous:

| | |
|---|---|
| - copolymère éthylène-vinylacétate comportant 40 % d'acétate; | 6O |
| - copolymère éthylène-vinylacétate greffé avec du triméthoxy-vinyle silane, et comportant 27 % d'acétate, un silane étant greffé sur ce copolymère; | 30 |
| - Copolymère éthylène-propylène- diène | 10 |
| - Trihydrate d'alumine ayant une surface spécifique d'environ 4 m²/g. | 180 |
| - une cire de polyéthylène | 4 |

Dans ce matériau, le mélange de ces trois copolymères procure une excellente souplesse à basse température.

Le greffage d'un silane fonctionnel sur le second copolymère d'éthylène-vinylacétate comportant 27 % d'acétate procure une bonne tenue mécanique et une déchirabilité longitudinale qui est à la fois facile et régulière. Pour désolidariser une partie du revêtement d'un câble, par rapport au reste du câble, il n'est pas nécessaire de faire une coupure franche, il suffit de faire une légère entaille. On réduit ainsi le risque d'endommager, avec un outil tranchant, le revêtement individuel éventuel devant rester pour la protection de conducteurs constituant le câble. Dans cet exemple de composition, le silane fonctionnel utilisé pour greffer le copolymère d'éthylène-vinylacétate est du triméthoxy-vinyle-silane, en quantité telle que l'indice de fluidité du matériau obtenu est compris entre 1 et 10 grammes pour 10 minutes à 190 °C, et sous un poids de 5 kg, dans les conditions prévues par la norme ISO 1133.

Dans d'autres exemples de réalisation, ce copolymère peut être greffé avec tout autre silane fonctionnel, avec un taux de greffage tel que l'indice de fluidité du matériau obtenu est voisin des 1 à 10 grammes mentionnés ci-dessus.

Le copolymère éthylène-propylène-diène comporte environ 5 % d'un diène, car il est vendu couramment avec une telle composition, mais ce diène n'a pas d'effet notable sur les caractéristiques du matériau. Il peut donc être omis. Le copolymère éthylène-propylène, avec ou sans diène, contribue à la souplesse du matériau à basse température, et à l'absorption de la charge d'agent ignifugeant.

L'agent ignifugeant utilisé dans cet exemple de composition est un agent très classique, du trihydrate d'alumine. Mais il peut être remplacé par un autre agent ignifugeant classique, en quantité adaptée à la résistance au feu que l'on souhaite obtenir, et à la surface spécifique de l'agent utilisé.

Cet exemple de composition comporte en outre un agent de mise en oeuvre qui est destiné à faciliter l'extrusion du matériau pour revêtir un câble. Cet agent de mise en oeuvre est dans cet exemple une cire de polyéthylène, mais tout autre agent de mise en oeuvre pourrait être utilisé. L'homme de l'Art choisira la quantité de cet agent en fonction de sa nature, et en fonction de la facilité de mise en oeuvre qui est souhaitée. La quantité de cet agent peut varier de 1 à 10 parties pour cent parties des copolymères, selon les cas. Quelle qu'en soit la quantité, cet agent de mise en oeuvre n'influe pas ou peu sur les qualités de résistance au feu, de déchirabilité, et de souplesse du matériau.

Cet exemple de composition permet d'obtenir un matériau de revêtement de câble à un coût plus faible que les compositions connues, alors que le coût de mise en oeuvre industrielle est identique. Par ailleurs cet exemple de composition présente une meilleure résistance au feu, et une meilleure déchirabilité comme le montre le tableau ci-dessous.

| Test | Matériau de type connu | Matériau ayant la composition ci-dessus. |
|---|---|---|
| Résistance au feu (indice d'oxygène) | 30 à 40 % | 40 à 50 % |
| Résistance au déchirage selon norme ISO 64 | > 10 N/mm | < 8 N/mm |
| Résistance au déchirement selon norme ASTM D 64 | > 35 N/mm | < 30 N/mm |

## Revendications

1. Matériau fortement ignifugé et sans halogène, facilement déchirable et ayant une très bonne souplesse à basse température, notamment pour revêtement de câble; comportant la composition suivante, exprimée en parties pour 100 parties de l'ensemble des polymères mentionnés ci-dessous :
| | |
|---|---|
| - un premier copolymère éthyléne-vinylacétate comportant 40 à 50% d'acétate; | 50 à 70 parties |
| - un second copolymère éthylène-vinylacétate comportant 30 à 50 % d'acétate; un silane étant greffé sur ce second copolymère; | 20 à 40 parties |
| - un copolymère éthylène - propylène comportant entre 60 et 75 % d'éthylène; | 10 à 20 parties |
| - un agent ignifugeant; | en quantité choisie selon le degré souhaité de résistance au feu. |

2. Matériau selon la revendication 1, **caractérisé en ce que** le silane a un taux de greffage tel que l'indice de fluidité du matériau obtenu est compris entre 1 et 10 grammes pour 10 minutes à 190°C, sous un poids de 5 kg, dans les conditions prévues par la norme ISO 1133.

3. Matériau selon l'une des revendications 1 ou 2 **caractérisé en ce que** le silane est du triméthoxy-vinyle-silane.

4. Matériau selon la revendication 1, **caractérisé en ce que** l'agent ignifugeant est du trihydrate d'alumine; et **en ce que** ce trihydrate d'alumine a une surface spécifique comprise entre 3 et 8 m²/g.

5. Matériau selon la revendication 1, **caractérisé en ce que** le second copolymère éthylène-vinylacétate est greffé avec du triméthoxy-vinyl-silane en quantité telle que l'indice de fluidité du matériau obtenu est compris entre 1 et 10 grammes pour 10 minutes, à 190°C, et sous un poids de 5 kg, dans les conditions prévues par la norme ISO 1133.

## Claims

1. Highly flame-proofed, halogen-free material, easy to tear and having very good flexibility at low temperature, for cable coating in particular; containing the following composition expressed in parts per 100 parts of all the polymers listed below:
| | |
|---|---|
| - a first ethylene-vinylacetate copolymer containing 40 to 50% acetate | 50 to 70 parts |
| - a second ethylene-vinylacetate copolymer containing 30 to 50% acetate; a silane being grafted onto this second copolymer | 20 to 40 parts |
| - an ethylene-propylene copolymer containing between 60 and 75% ethylene; | 10 to 20 parts |
| - a flame-proofing agent | quantity chosen as per desired degree of fire-resistance |

2. Material as in claim 1, **characterized in that** the graft ratio of the silane is such that the melt flow index of the material obtained lies between 1 and 10 grams per 10 minutes at 190°C under a weight of 5 kg, and under the conditions laid down by ISO standard 1133.

3. Material as in either of claims 1 or 2, **characterized in that** the silane is trimethoxy-vinyl- silane.

4. Material as in claim 1, **characterized in that** the flame-proofing agent is alumina trihydrate; and **in that** this alumina trihydrate has a specific surface area of between 3 and 8 m²/g.

5. Material as in claim 1, **characterized in that** the second ethylene-vinylacetate copolymer is grafted with trimethoxy-vinyl-silane in a quantity such that the melt flow index of the material obtained lies between 1 and 10 grams for 10 minutes at 190°C under a weight of 5 kg and under the conditions provided by ISO 1133 standard.

## Patentansprüche

1. Material, welches stark flammhemmend ist und kein Halogen aufweist, das leicht reißbar ist und eine sehr gute Biegsamkeit bei tiefer Temperatur hat, insbesondere für eine Kabelhülle, welches die folgende Zusammensetzung aufweist, ausgedrückt in Teilen für 100 Teile gesamt der unten genannten Polymere:
| | |
|---|---|
| - ein erstes Ethylen-Vinylacetat-Copolymer, welches 40 bis 50% Acetat aufweist; | 50 bis 70 Teile |
| - ein zweites Ethylen-Vinylacetat-Copolymer, welches 30 bis 50% Acetat aufweist; ein Silan ist auf dieses zweite Copolymer aufgepfropft; | 20 bis 40 Teile |
| - ein Ethylen-Propylen-Copolymer, welches zwischen 60 und 75% Ethylen aufweist; | 10 bis 20 Teile |
| - ein Flammhemmmittel; | in einer gemäß dem gewünschten Grad an Feuerbeständigkeit gewählten Menge |

2. Material nach Anspruch 1, **dadurch gekennzeichnet, dass** das Silan einen solchen Veredelungsgrad hat, dass der Fluiditätsindex des gewonnenen Materials zwischen 1 und 10 Gramm liegt, für 10 Minuten bei 190°C, unter einem Gewicht von 5 kg, bei den Bedingungen, die durch die Norm ISO 1133 vorgesehen sind.

3. Material nach einem der Ansprüche 1 oder 2, **dadurch gekennzeichnet, dass** das Silan Trimethoxy-Vinyl-Silan ist.

4. Material nach Anspruch 1, **dadurch gekennzeichnet, dass** das Flammhemmmittel Aluminiumtrihydrat ist und dass dieses Aluminiumtrihydrat eine spezifische Oberfläche zwischen 3 und 8 m2/g hat.

5. Material nach Anspruch 1, **dadurch gekennzeichnet, dass** das zweite Ethylen-Vinylacetat-Copolymer mit Trimethoxy-Vinyl-Silan in einer solchen Menge aufgepfropft ist, dass der Fluiditätsindex des gewonnenen Materials zwischen 1 und 10 Gramm liegt, für 10 Minuten bei 190°C, und unter einem Gewicht von 5 kg, bei den Bedingungen, die durch die Norm ISO 1133 vorgesehen sind.
